# EUROPEAN PATENT APPLICATION

(11) **EP 4 362 231 A1**
(43) Date of publication of application: **01.05.2024**
(21) Application number: 22827952.7
(22) Date of filing: 09.03.2022
(51) Int. Cl.: H01Q 13/20, H01Q 13/08, H01Q 21/08, H01Q 21/24

(54) **PATCH ARRAY ANTENNA, ANTENNA DEVICE, AND RADAR DEVICE**

(30) Priority: 21.06.2021 JP 2021102129
(71) Applicant: Furuno Electric Co., Ltd., Nishinomiya-City, Hyogo 662-8580 (JP)
(72) Inventor: IIO, Kenichi, Nishinomiya-City, Hyogo 662-8580 (JP)
(74) Representative: Müller Hoffmann & Partner
(86) International application number: PCT/JP2022/010260
(87) International publication number: WO 2022/270031

(57) **Abstract**

A patch array antenna (1A, 1B, 1C, or 1D), an antenna (10), and a Radio Detecting and Ranging (RADAR) apparatus (6) are disclosed. The patch array antenna (1A, 1B, 1C, or 1D) is provided with a dielectric substrate (2) and a plurality of antenna elements (3a) formed on the dielectric substrate (2). The patch array antenna (1A, 1B, 1C, or 1D) is arranged in a direction (longitudinal direction L) and connected in series. At least one terminal of at least one input terminal (41a, 41b) and at least one output terminal (42a, 42b) connected to at least one antenna element (3) among the plurality of antenna elements (3a) is connected at a position away from the centerline (C) extending in the direction (L) of the antenna element (3). The antenna (10) includes a plurality of patch array antennas (1F). The RADAR apparatus (6) is formed using the antenna (10).

## Description

The present invention relates to patch array antenna, antenna, and radar apparatus.

### Background Art

Patent documents 1 and 2 disclose series feeding type patch array antennas in which multiple antenna elements are arranged in one direction and connected in series.

### Citation List

### Patent Literature

Patent Document 1: Chinese Patent No. 106972244
Patent Document 2: Publication of European Patent Application Publication No. 2950390

### Summary of Invention

### Technical Problem(s)

The conventional series feeding type patch antennas described in the above prior arts, generate a standing wave over an entire antenna. Such an antenna requires a design that considers both the power supplied from a center towards an end and the power bouncing off from the ends and flowing in the opposite direction. In addition, the amount of phase shift of the antenna elements also requires strict adjustment, and such adjustment affects the quantity of radiation of each antenna element. For this reason, it is difficult to control the desired weighting of the quantity of radiation of each antenna element.

Therefore, a need exists a need for an improved patch array antenna, the antenna, and the Radio Detecting and Ranging (RADAR) apparatus that can control the weighting of the quantity of radiation of each antenna element.

### Solution to Problem

In order to solve the foregoing problem and to provide other advantages, one aspect of the present disclosure is a patch array antenna. The patch array antenna is provided with a dielectric substrate and a plurality of antenna elements formed on the dielectric substrate. The patch array antenna is arranged in a direction and connected in series. At least one terminal of at least one input terminal and at least one output terminal connected to at least one antenna element among the plurality of antenna elements is connected at a position away from the centerline extending in the direction of the antenna element. An advantage of various embodiments is that the number and different positions of the input terminal and the output terminal of the patch array antenna allow easy control of the weighting of the quantity of radiation of each antenna element and suppress characteristic determination of antenna elements.

In an aspect, a patch array antenna including a dielectric substrate and a plurality of antenna elements is disclosed. The plurality of antenna elements is formed on the dielectric substrate, arranged in a direction, and connected in series. At least one terminal of at least one input terminal and at least one output terminal connected to at least one antenna element of the plurality of antenna elements is connected at a position outside the centerline extending in the direction of the at least one antenna element.

In an aspect, the at least one input terminal and the at least one output terminal are connected at different positions in a direction (*e.g*. width direction) perpendicular to the centerline. In an aspect, the at least one input terminal and the at least one output terminal are connected at a position eccentric to the centerline.

In an aspect, the at least one input terminal is two or more input terminals, and the at least one output terminal is two or more output terminals.

In an aspect, a part of the two or more input terminals is connected to a position that is eccentric to the first side from the centerline, and the remaining input terminals are connected to a position that is eccentric to the second side opposite to the first side from the centerline.

In an aspect, some of the two or more output terminals are connected to a position that is eccentric to the first side from the centerline, and the remaining output terminals are connected to a position that is eccentric to the second side opposite to the first side from the centerline.

In an aspect, the two or more input terminals are even-numbered input terminals, and the even-numbered input terminals are connected at a position that is line symmetry with respect to the centerline.

In an aspect, two or more output terminals are even-numbered output terminals, and the above even-numbered output terminals are connected at a position that is line symmetry with respect to the above centerline.

In an aspect, an electromagnetic wave of a reverse phase is input to two of the two or more input terminals.

In an aspect, the patch array antenna generates an electromagnetic wave of a plane of polarization perpendicular to the direction.

In the above aspect, the patch array antenna need not have a phase shifter. This makes it possible to eliminate the radiation caused by the phase shifter.

The antenna of another aspect of the present invention includes a plurality of the above patch array antennas, and the plurality of patch array antennas are arranged in a direction perpendicular to the array direction of the antenna element. According to this, the antenna with the above patch array antenna can be realized.

The radar apparatus of another aspect of the present invention also has the above antenna. According to this, the radar apparatus with the above patch array antenna can be realized.

### BRIEF DESCRIPTION OF THE DRAWINGS

The following detailed description of illustrative embodiments is better understood when read in conjunction with the appended drawings. For the purpose of illustrating the present disclosure, exemplary constructions of the disclosure are shown in the drawings. However, the present disclosure is not limited to a specific device, or a tool and instrumentalities disclosed herein. Moreover, those skilled in the art will understand that the drawings are not to scale.
FIG. 1A illustrates a top view of an example representation of a patch array antenna, in accordance with a first embodiment of the present disclosure;
FIG. 1B illustrates an enlarged view of an antenna element with feeder lines and input/output terminals in the patch array antenna of FIG. 1A, in accordance with the first embodiment of the present disclosure;
FIG. 2A illustrates a schematic diagram showing the working of the patch array antenna of standing wave type, in accordance with the first embodiment of the present disclosure;
FIG. 2B illustrates a schematic diagram showing the working of the patch array antenna of FIG. 1A, in accordance with the first embodiment of the present disclosure;
FIG. 3A illustrates an enlarged view of an example representation of an antenna element with the feeder line and input/output terminals, in accordance with the first embodiment of the present disclosure;
FIG. 3B illustrates a graph showing the frequency characteristics of antenna elements, in accordance with the first embodiment of the present disclosure;
FIG. 4 illustrates a top view of another example representation of a patch array antenna, in accordance with a first embodiment of the present disclosure;
FIG. 5A illustrates a top view of an example representation of a patch array antenna, in accordance with a second embodiment of the present disclosure;
FIG. 5B illustrates an enlarged view of an antenna element with feeder lines and input/output terminals in the patch array antenna of FIG. 5A, in accordance with the second embodiment of the present disclosure;
FIG. 6A illustrates an enlarged view of an example representation of an antenna element with the feeder line and input/output terminals, in accordance with the second embodiment of the present disclosure;
FIG. 6B illustrates a graph showing the frequency characteristics of antenna elements, in accordance with the second embodiment of the present disclosure;
FIG. 7A and FIG. 7B illustrate calculation results of the directivity of the eight-stage patch array antenna shown in FIG. 5A, in accordance with the second embodiment of the present disclosure;
FIG. 8 illustrates a top view of another example representation of a patch array antenna, in accordance with a second embodiment of the present disclosure;
FIG. 9A illustrates a calculation result of the directivity of the ten-stage patch array antenna shown in FIG. 8, in accordance with the second embodiment of the present disclosure;
FIG. 9B illustrates a graph showing the frequency characteristics of antenna elements, in accordance with the second embodiment of the present disclosure;
FIG. 10A illustrates a top view of an example representation of a patch array antenna, in accordance with a preferred embodiment of the present disclosure;
FIG. 10B illustrates a top view of another example representation of a patch array antenna, in accordance with a preferred embodiment of the present disclosure;
FIG. 11 shows an example representation of an antenna, in accordance with a preferred embodiment of the present disclosure; and
FIG. 12 shows an example representation of a RADAR apparatus, in accordance with a preferred embodiment of the present disclosure.

### DETAILED DESCRIPTION OF THE INVENTION

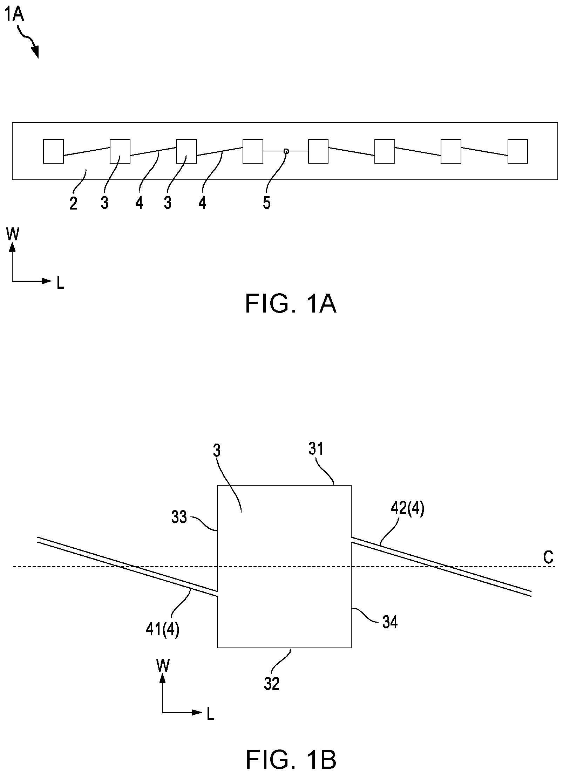

Various embodiments of the present disclosure are described hereinafter with reference to FIGS. 1A-1B to FIG. 12.

[First Embodiment] FIG. 1A illustrates a top view of an example representation of a patch array antenna 1A, in accordance with a first embodiment of the present disclosure.

The patch array antenna 1A is equipped with a dielectric substrate 2 and a plurality of antenna elements 3a formed on a first main surface of the dielectric substrate 2. The plurality of antenna elements 3a (where individual antenna elements are referred to as an antenna element 3) is not limited to the example shown in FIG. 1A, other configurations of the plurality of antenna elements 3a are also possible. A grounded conductor plate (not shown in FIG. 1A) is provided on a second main surface opposite to the first main surface of the dielectric substrate 2.

The patch array antenna 1A is a series feeding type patch array antenna, and the plurality of antenna elements 3a that are arranged in one direction and connected in series via a feeder line 4. Hereafter, the direction in which the plurality of antenna element 3a is arranged is referred to as "longitudinal direction L", "array direction L" or "direction L". The direction perpendicular to the direction L and parallel to the main surface of the dielectric substrate 2 is referred to as "width direction W" or "direction W".

The plurality of antenna elements 3a and the feeder line 4 are formed, for example, by photolithographic patterning of a metal foil provided on the dielectric substrate 2. For this reason, the plurality of antenna elements 3a and the feeder line 4 are integrated. Hereafter, the plurality of antenna elements 3a and the feeder line 4 are sometimes included and referred to as "antenna pattern".

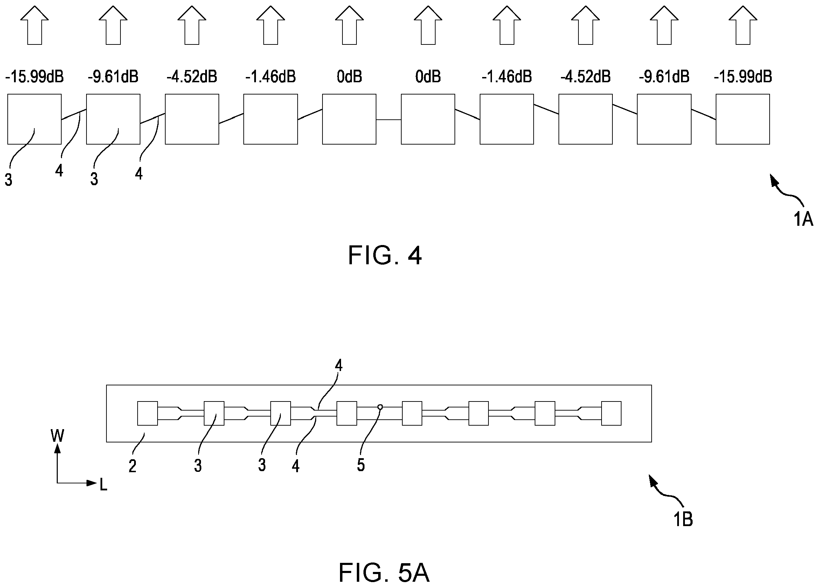

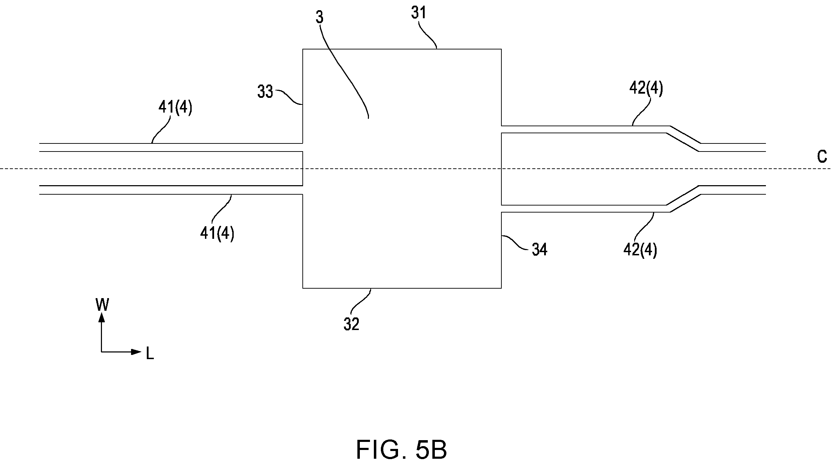

The feeder line 4 may extend diagonally to array directionL as shown in Figs 1A and 1B or may extend to array directionL as shown in Figs 5A and 5B below and bend in a stepped manner in the middle.

A feeding point 5 is provided in the center of the array direction L of the antenna pattern. Specifically, the total number of the plurality of antenna elements 3a (herein after an individual antenna element is referred to as antenna element 3) is an even number, and thus a feeding point 5 is provided in the feeder line 4 formed between centered antenna elements. Not limited to this, the feeding point 5 may also be provided at one end of the array direction L of the antenna pattern. As shown in FIG. 1A, the plurality of antenna elements 3a are connected with the feeding point 5 respectively, via an input terminal 41 and an output terminal 42.

FIG. 1B is an enlarged view of the antenna element 3 with feeder lines 4a and 4b, and Input/Output (I/O) terminals 41 and 42 of example representation of FIG. 1A, in accordance with the first embodiment of the present disclosure. The feeder lines 4a and 4b may extend diagonally to the array direction L. As shown in FIG. 1B, the antenna element 3 has a shape that is line symmetry about the centerline (symmetry line) C extending to the array direction L. In other words, the centerline C passes through the center of the width direction W of the antenna element 3. In three-dimensional representation, the centerline C can also be said to be a plane of symmetry perpendicular to the width direction W.

The two feeder lines 4a and 4b are connected to the antenna element 3 at both ends. It should be noted that, referring to FIG. 1A, the ends of the feeder line 4 are not connected to the antenna element 3 and between the ends of the feeder line 4 an even number of the plurality of antenna elements 3a are connected. Referring to FIG. 1B, the feeder line 4a near the feeding point 5 serves as the input terminal 41, and the other feeder line 4b far from the feeding point 5 serves as the output terminal 42. Only the input terminal 41 is connected to the antenna element 3 at the end.

Specifically, the antenna element 3 is formed in a rectangular shape with two sides 31 and 32 extending along the array direction L and two sides 33 and 34 extending along the width direction W. The input terminal 41 is connected to the side 33 of the two sides 33 and 34 extending along the width direction W. The output terminal 42 is connected to the side 34 of the two sides 33 and 34 extending along the width direction W. As the design of the patch array antenna 1A is made in the direction L from the feeding point 5 to the end of the patch array antenna 1A, the weighting of the quantity of radiation of each antenna element 3 can be easily controlled.

In this embodiment, in at least one antenna element 3, at least one of the input terminal 41 and the output terminal 42 are connected to a position that is eccentric to the centerline C of the antenna element 3. Further, the input terminal 41 and the output terminal 42 are connected to different positions in the width direction W of the antenna element 3.

The operation of the first embodiment will be described below.

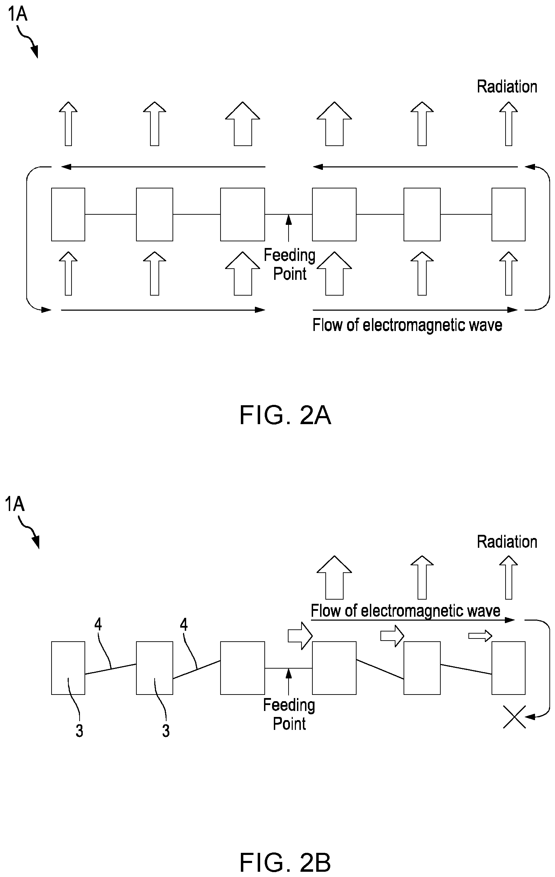

FIG. 2A illustrates a schematic diagram showing the working of the patch array antenna 1A of standing wave type, in accordance with the first embodiment of the present disclosure. The patch array antenna 1A of a standing wave type having the plurality of antenna elements 3a (individual antenna element is referred to as antenna element 3) are connected in series via the feeder line 4 passing on the centerline C. FIG. 2A shows the propagation of an electromagnetic wave 44 fed from the center of the antenna pattern.

The electromagnetic wave 44 powered from the center of the antenna pattern travels toward the edge and some of the electromagnetic wave 44 radiates at the antenna element 3. Also, the electromagnetic wave 44 reflects at the edge of the antenna pattern and travels again toward the center and some of the electromagnetic wave 44 radiates at the antenna element 3. This reciprocating electromagnetic wave 44 process repeats, resulting in radiation 46 from the patch array antenna 1A. The patch array antenna 1A as shown in FIG. 2A is called a standing wave because the electromagnetic wave 44 traveling from the center to the edge overlaps with the electromagnetic wave 44 reflecting at the edge and returning to the center. This requires that the electromagnetic wave 44 coming from the right and the one coming from the left radiate equally when viewed by a single antenna element 3, so the feeder line 4 connected to the antenna element 3 is formed on the centerline C.

The problem with the patch array antenna 1A of standing wave type has been attributed to its designability. In other words, it is difficult to control the weighting of the quantity of radiation 46 because it works for both electromagnetic waves 44 coming from the right and those coming from the left. When the number of arrays is small, extreme weighting is required because of the repetition of the track width. This may change the amount of phase shift of the antenna element 3, and hence the patch array antenna 1A of standing wave type needs to be adjusted to compensate for the phase shift.

FIG. 2B illustrates a schematic diagram showing the working of the patch array antenna 1A of FIG. 1A, in accordance with the first embodiment of the present disclosure. As shown in Fig. 2B, the electromagnetic wave 44 traveling from the center of the antenna pattern to the edge radiates all at the antenna element 3 and is not returned in the opposite direction. That is, by connecting the input terminal 41 and the output terminal 42 to the antenna element 3 (as described in FIG. 1B), the quantity of radiation 46 at the antenna element 3 and the amount transmitted from the output terminal 42 to the lower stage can be controlled in a one-way manner for the electromagnetic wave 44 input from the input terminal 41.

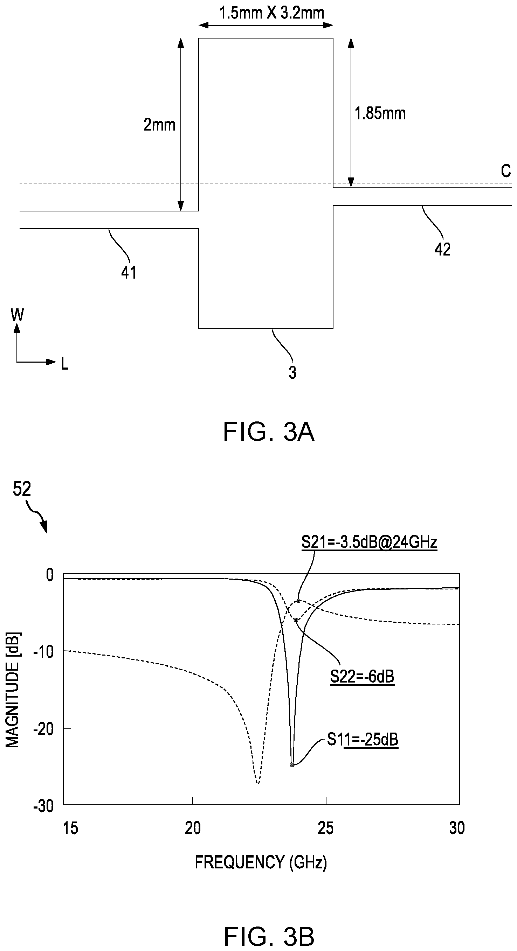

FIG. 3A illustrates an enlarged view of an example representation of antenna element 3 connecting with the feeder line 4, and input/output terminals 41 and 42, in accordance with the first embodiment of the present disclosure. FIG. 3B illustrates a graph 52 showing frequency characteristics of the plurality of antenna elements 3a of FIG. 1A, in accordance with the first embodiment of the present disclosure. In the graph 52, S11 represents a magnitude of -25 decibel (dB), S21 represents a magnitude of -3.5 dB at a frequency of 24 gigahertz (GHz) and S22 represents magnetite of -6 dB. As shown in FIG. 3A, by shifting the positions of the input terminal 41 and the output terminal 42 connected to the antenna element 3 from the centerline C, the electromagnetic wave 44 entering from the input terminal 41 at the frequency of 24 GHz is fed to the antenna element 3 almost without reflection (S11= - 25dB) and - 3.5dB (S21= - 3.5dB) of energy is output to the output terminal 42, as shown in FIG. 3B. On the other hand, the amount of the electromagnetic wave 44 entering from the output terminal 42 (*i.e*., reverting) is reduced (S22= - 6dB). This indicates that it is possible to design the entire the patch array antenna 1A in a single, one-way design without considering the effects of reflection into account.

In the patch array antenna 1A as shown in the FIG. 2A, the input and output terminals 41 and 42 are connected on the centerline C of the antenna element 3, and the reflection coefficients match between the traveling direction of the electromagnetic wave 44 and the opposite direction. While considering the consistency on the input side, the consistency on the output side must also be considered, this may make the design of the patch array antenna 1A difficult. The excellent designability of the patch array antenna 1A can be achieved as shown in FIG. 2B.

FIG. 4 illustrates a top view of another example representation of the patch array antenna 1A, in accordance with a first embodiment of the present disclosure. For example, if an antenna with a beam width of 10 degrees and a side lobe level of - 40 degrees is designed with ten antenna elements (individual antenna element is referred to as antenna element 3), it functions as patch array antenna 1A by weighting the quantity of radiation 46 as shown in the FIG. 4.

It should be noted that the antenna element 3 shown in the FIG. 2A usually consists of a half-wavelength antenna and generates an electromagnetic wave of a plane of polarization parallel to the array direction L. The problem, in this case, is that when the power is supplied from the center of the patch array antenna 1A, a phase difference of 180 degrees from left to right is required, that is, a phase shifter composed of meander lines or the like is required at the center. In high-frequency bands such as 24 GHz and 76 GHz, radiation by a phase shifter becomes a problem because radiation is easily emitted from the bending of the line or the like.

On the other hand, according to the present embodiment, it is possible to design the whole patch array antenna 1A in a single and one-way design without considering the influence of reflection as described above, so it is easy to design it to generate the electromagnetic wave of the plane of polarization perpendicular to the array direction L, which makes it possible to eliminate the phase shifter.

[Second Embodiment] FIG. 5A illustrates a top view of an example representation of a patch array antenna 1B, in accordance with a second embodiment of the present disclosure. The plurality of antenna elements 3a is shown in FIG. 5A. FIG. 5B illustrates an enlarged view of the antenna element 3 with the feeder line 4 represented in FIG. 5A, in accordance with the second embodiment of the present disclosure. The detailed explanation may be omitted by giving the same number to the configuration that overlaps with the FIG. 1 to FIG. 4.

In this embodiment, two input terminals 41a and 41b, and two output terminals 42a and 42b are connected to antenna element 3 (except antenna element 3 at the end). Only two input terminals 41a and 41b are connected to antenna element 3 at the end.

Specifically, antenna element 3 is formed in a rectangular shape, and the two input terminals 41a and 41b are connected to one side 33 of two sides 33 and 34 extending along the width direction W, and the two output terminals 42a and 42b are connected to the side 34 of two sides 33 and 34.

Not limited to this, there may be three or more input terminals 41a, 41b, and so on, and three or more output terminals 42a, 42b, and so on.

In this embodiment, at least one of the two input terminals 41a and 41b and the two output terminals 42a and 42b (all terminals in the illustrated example of FIG. 5B) are connected to a position that is eccentric to the centerline C of the antenna element 3. In addition, the two input terminals 41a and 41b and the two output terminals 42a and 42b are connected to different positions in the width direction W of the antenna element 3.

In addition, one of the two input terminals 41a and 41b (*i.e.*, the input terminal 41a) is connected to a position that deviates from the centerline C in one (first side) of the width direction W, and the other input terminal 41b is connected to a position that deviates from the centerline C in the other (second side) of the width direction W. That is, the two input terminals 41a and 41b are connected to both sides of the width direction W to sandwich the centerline C.

More specifically, the two input terminals 41a and 41b are connected at a position where the line symmetry occurs with respect to the centerline C. Even when the two input terminals 41a and 41b are an even number of four or more, they are preferably connected at a position where the line symmetry occurs with respect to the centerline C. In addition, the shape itself of the two input terminals 41a and 41b is also line symmetry with respect to the centerline C.

Similarly, one of the two output terminals 42a and 42b (*i.*e., the output terminal 42a), is connected to a position that deviates from the centerline C in one (first side) direction W in the width direction, and the other output terminal 42b is connected to a position that deviates from the centerline C in the other (second side) direction W in the width direction. That is, the two output terminals 42a and 42b are also connected to both sides in the width direction W to sandwich the centerline C.

More specifically, the two output terminals 42a and 42b are also connected at the position where the line symmetry is about the centerline C. Even when the two output terminals 42a and 42b are an even number of four or more, it is preferable to connect at the position where the line symmetry is about the centerline C. In addition, the shape itself of the two output terminals 42a and 42b is also line symmetry about the centerline C.

The two input terminals 41a and 41b may be connected more inside the width direction W than the two output terminals 42a and 42b as shown in FIG. 5B, or conversely, outside the width direction W. In other words, the two output terminals 42a and 42b may be connected more outside the width direction W than the two input terminals 41a and 41b, or they may be connected more inside the width direction W.

Without limitation, the two input terminals 41a and 41b, and the two output terminals 42a and 42b may be alternately connected along the width direction W.

The operation of the second embodiment will be described below.

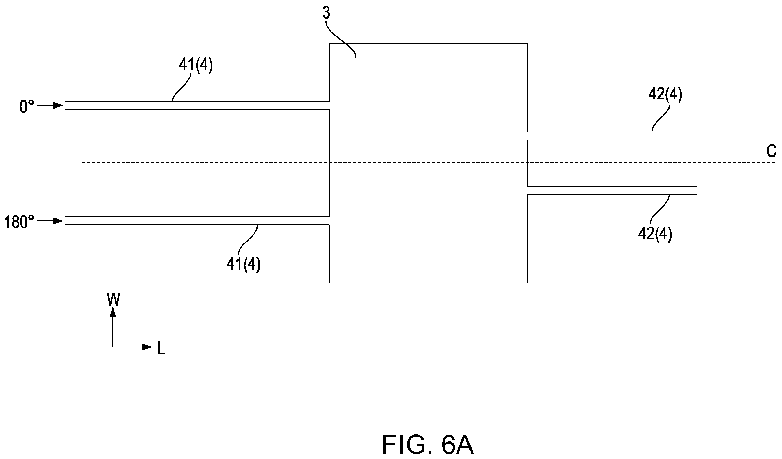

FIG. 6A illustrates an enlarged view of an example antenna element 3 with the feeder line 4, the two input terminals 41a and 41b, and the two output terminals 42a and 42b, in accordance with the second embodiment of the present disclosure. The two input terminals 41a and 41b and the two output terminals 42a and 42b are connected to positions that are out of the centerline C of the antenna element 3 and are in symmetry with respect to the centerline C. As shown in FIG. 6A, the electromagnetic waves 44 with a phase difference of 180 degrees are input to the two input terminals 41a and 41b.

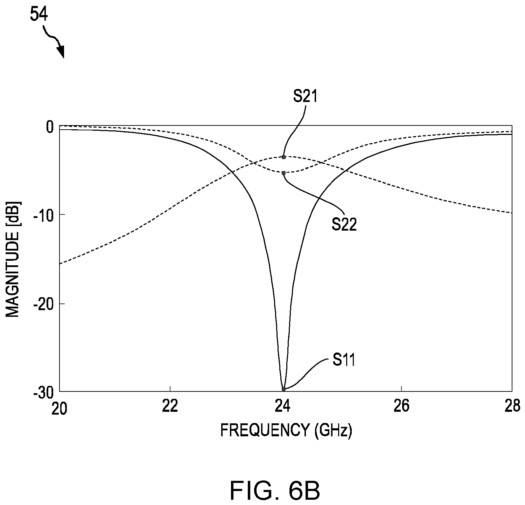

FIG. 6B illustrates a graph 54 showing the frequency characteristics of the plurality of the antenna elements 3a, in accordance with the second embodiment of the present disclosure. The graph 54 shows the sum of the amounts of power output from the two output terminals 42a and 42b, when the electromagnetic wave 44 with a phase difference of 180 degrees is input to the two input terminals 41a and 41b in FIG. 6A as the frequency characteristic of the scattering matrix. S11 represents a magnitude of -25dB, S21 represents a magnitude of -3.5 dB at a frequency of 24 GHz and S22 represents magnetite of -6 dB. In FIG. 6B there is no trap near the center frequency and the band is wider compared to the first embodiment (FIG. 3B), which has one input terminal 41 and one output terminal 42 as shown in FIG. 3B.

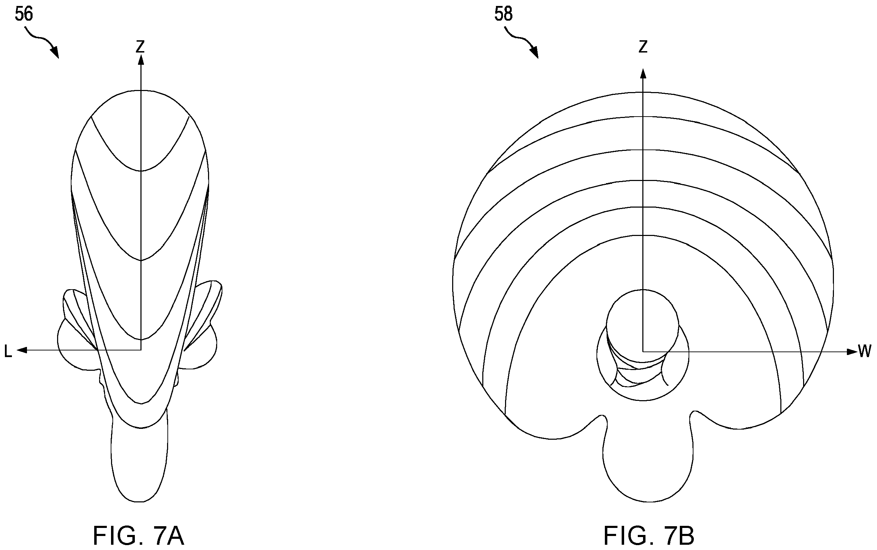

FIG. 7A and FIG. 7B illustrate calculation results 56 and 58 of directivity of the eight-stage patch array antenna 1B shown in FIG. 5A, in accordance with the second embodiment of the present disclosure. In the FIG. 7A, Z represents a "normal direction Z" of the main surface of the dielectric substrate 2, which is perpendicular to the array direction L and the width direction W. It can be seen that the patch array antenna 1B has a directivity in which the spread of the array direction L is suppressed.

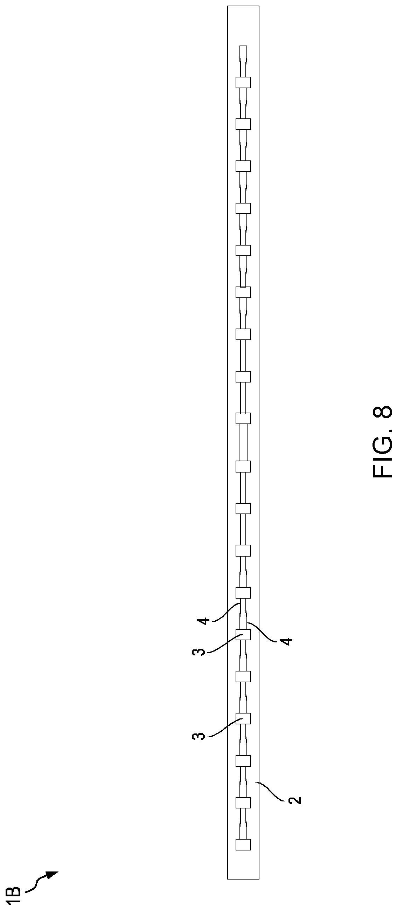

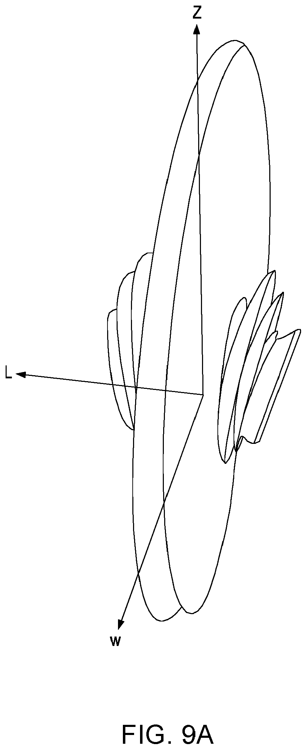

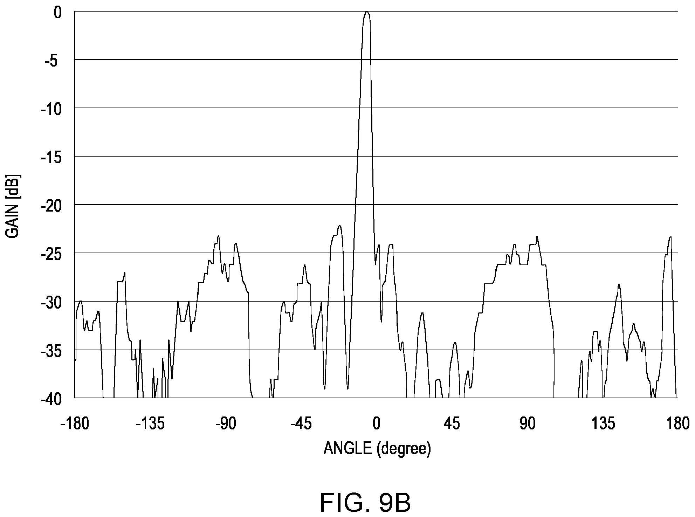

FIG. 8 illustrates a top view of an example representation of the patch array antenna 1B, in accordance with a second embodiment of the present disclosure. The patch array antenna 1B is a ten-stage patch array antenna 1B consisting of ten antenna elements 3 (i.e., the plurality of antenna elements 3a is ten). FIG 9A illustrates a calculation result 60 of the directivity of the ten-stage patch array antenna 1B shown in FIG. 8, in accordance with the second embodiment of the present disclosure. FIG. 9B illustrates a graph 62 showing the frequency characteristics of the plurality of antenna elements 3a of FIG. 8, in accordance with the second embodiment of the present disclosure. It should be noted that the patch array antenna 1B achieves the directivity of the beam width of five degrees in the array direction L.

In order to eliminate the need for a phase shifter as described above, it must be designed to generate the electromagnetic waves of a plane of polarization perpendicular to the array direction L. In this case, when the plurality of antenna elements 3a are connected by a single line, it becomes easy for the antenna element 3, which is a half-wavelength antenna, to excite both even and odd modes. As a result, it is difficult to design such a patch array antenna 1B.

An enlarged view of the antenna element 3 with the feeder line 4 of the patch array antenna 1B as shown in FIG. 5A is the same and applicable to the patch array antenna 1B as shown in FIG. 8, Therefore, as in the embodiment of FIG. 8, the two input terminals (*e.g*., the two input terminals 41a and 41b shown in FIG. 5B), and the two output terminals (*e.g*., the two output terminals 42a and 42b shown in FIG. 5B) are connected to positions where a line symmetry occurs with respect to the centerline C of the antenna element 3, and an electromagnetic wave of reverse phase is input to the two input terminals 41a and 41b to excite the reverse phase. This enables antenna element 3 to function in a single even mode, thereby suppressing characteristic determination due to the mixed mode of the plurality of antenna elements 3a and improving the designability of the patch array antenna 1B.

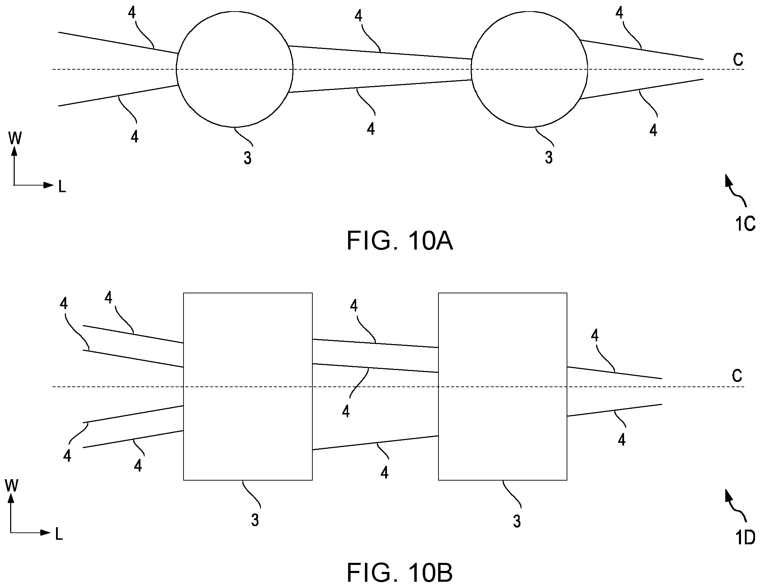

FIG. 10A illustrates a top view of an example representation of a patch array antenna 1C, in accordance with a preferred embodiment of the present disclosure. As shown, antenna elements 3c and 3d are circular in shape but can take other shapes, for example not limited to, a rectangular, square, *etc.* As a result, it is expected that sensitivity to horizontal polarization will be improved. It should be noted that the number of feeder lines 4c and 4d intervening with the antenna elements 3c and 3d is two. Feeder lines 4e and 4f are connected to the antenna element 3c and feeder lines 4g and 4h are connected to the antenna element 3d. The feeder lines 4c, 4d, 4e, 4f, 4g, and 4h may extend parallelly to the array direction L as shown in FIG. 10A. As shown, the antenna elements 3c and 3d have a shape that is line symmetry about the centerline (symmetry line) C extending to the array direction L. In other words, the centerline C passes through the center of the width direction W of the antenna elements 3c and 3d. In three-dimensional representation, the centerline C can also be said to be a plane of symmetry perpendicular to the width direction W.

FIG. 10B illustrates a top view of another example representation of a patch array antenna 1D, in accordance with a preferred embodiment of the present disclosure. As shown, the number of feeder lines 4c and 4d intervening with the antenna elements 3c and 3d is not limited to two, but it may be three or four.

In addition, the feeder line 4 intervening between antenna element 3 is preferably, but not limited to, connected at a position where the line symmetry is about the centerline C.

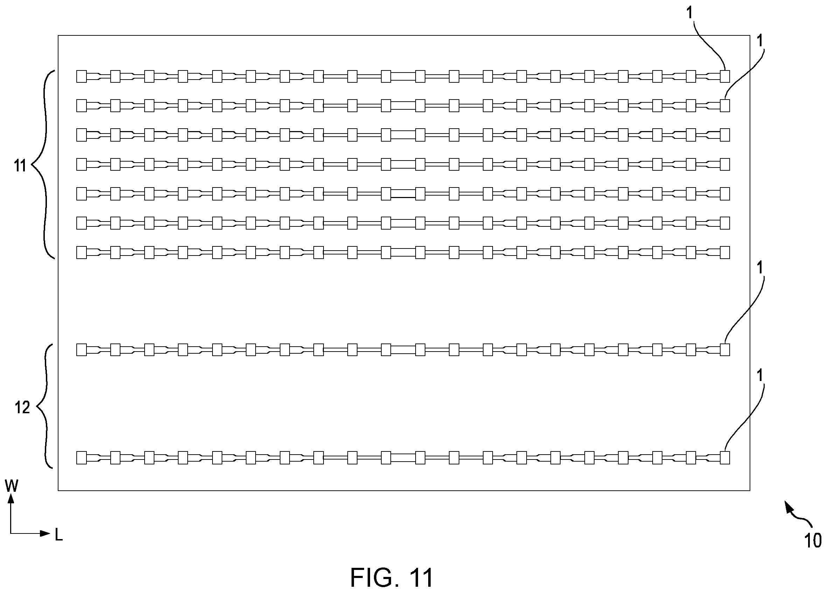

FIG. 11 illustrates an example representation of an antenna 10, in accordance with a preferred embodiment of the present disclosure. The antenna 10 is formed using a plurality of patch array antennas 1F. As shown, the plurality of patch array antennas 1F is formed using the patch array antenna 1B shown in FIG. 5A. It should be noted that the antenna 10 formed using the plurality of patch array antennas 1F includes one or more of the patch array antennas 1A, 1B, 1C, and 1D. The antenna 10 equipped with the plurality of patch array antennas 1F is arranged in a direction perpendicular to the array direction L of the antenna element 3.

In the illustrated example, the antenna 10 is equipped with a receiving antenna 11 containing six patch array antennas 1B and a transmitting antenna 12 containing two patch array antennas 1B. The antenna 10 of this embodiment is suitable as an antenna for a Multi-Input Multi-Output (MIMO) RADAR.

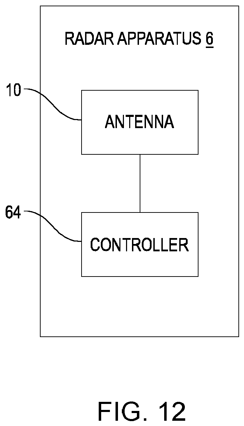

FIG. 12 illustrates an example representation of a RADAR apparatus 6, in accordance with a preferred embodiment of the present disclosure. The RADAR apparatus 6 is formed using the antenna 10 (*e.*g., the antenna 10 as depicted in FIG. 11). The RADAR apparatus 6 is equipped with the antenna 10 and a controller 64. The receiving antenna 11 (*see*, FIG. 11) converts the reflected electromagnetic wave into an electrical signal and outputs the electrical signal to the controller 64. The controller 64 controls one or more detection and ranging operations of the RADAR apparatus 6, based on the electromagnetic waves received by the receiving antenna 11.

The RADAR apparatus 6 in this embodiment is the MIMO RADAR that can perform beamforming to enhance directivity in a predetermined direction.

As described above, the present invention is not limited to the embodiment described above, and it is of course possible for those skilled in the art to make various modifications.

### (Reference Sign List)

1 (1A to 1D) patch array antenna, 2 dielectric substrate, 3 antenna element, 4 feeder line, 41 input terminal, 42 output terminal, 5 feeding point, 10 antenna, 11 receiving antenna, 12 transmitting antenna, 6 radar apparatus, 60 control section, C center line, L array direction, W width direction, Z normal direction.

## Claims

1. A patch array antenna (1A, 1B, 1C, or 1D), comprising:
a dielectric substrate (2); and
a plurality of antenna elements (3a) formed on the dielectric substrate (2), arranged in a direction (L), and connected in series,
wherein at least one terminal of at least one input terminal (41a, 41b) and at least one output terminal (42a, 42b) connected to at least one antenna element (3) of a plurality of antenna elements (3a) is connected at a position outside the centerline (C) extending in the direction (L) of the at least one antenna element (3).

2. The patch array antenna (1A, 1B, 1C, or 1D) according to claim 1, wherein the at least one input terminal (41a, 41b) and the at least one output terminal (42a, 42b) are connected at different positions in a direction (W) perpendicular to the centerline (C).

3. The patch array antenna (1A, 1B, 1C, or 1D) according to claim 1 or 2, wherein the at least one input terminal (41a, 41b) and the at least one output terminal (42a, 42b) are connected at a position eccentric to the centerline (C).

4. The patch array antenna (1A, 1B, 1C, or 1D) according to any of claims 1 to 3, wherein the at least one input terminal (41a, 41b) is two or more input terminals, and the at least one output terminal (42a, 42b) is two or more output terminals.

5. The patch array antenna (1A, 1B, 1C, or 1D) according to claim 4, wherein a part of the two or more input terminals (41a, 41b) is connected to a position that is eccentric to the first side from the centerline, and the remaining input terminals are connected to a position that is eccentric to the second side opposite to the first side from the centerline (C).

6. The patch array antenna (1A, 1B, 1C, or 1D) according to claim 4 or 5, wherein a part of the two or more output terminals (42a, 42b) are connected to a position that is eccentric to the first side from the centerline (C), and the remaining output terminals are connected to a position that is eccentric to the second side opposite to the first side from the centerline (C).

7. The patch array antenna (1A, 1B, 1C, or 1D) according to any of claims 4 to 6, wherein the two or more input terminals are even-numbered input terminals, and the even-numbered input terminals are connected at a position that is line symmetry with respect to the centerline (C).

8. The patch array antenna (1A, 1B, 1C, or 1D) according to any of claims 4 to 7, wherein the two or more output terminals (41a, 41b) are even-numbered output terminals, and the even-numbered output terminals (42a, 42b) are connected at a position that is line symmetry with respect to the centerline (C).

9. The patch array antenna (1A, 1B, 1C, or 1D) according to any of claims 4 to 8, wherein the two of the two or more input terminals are input with an electromagnetic wave of a reverse phase.

10. The patch array antenna (1A, 1B, 1C, or 1D) according to any of claims 1 to 9, wherein the patch array antenna generates the electromagnetic wave of a plane of polarization perpendicular to the direction (L).

11. The patch array antenna (1A, 1B, 1C, or 1D) according to any of claims 1 to 10, wherein no phase shifter is necessary.

12. The patch array antenna (1A, 1B, 1C, or 1D) according to any of claims 1 to 11, wherein the two or more input terminals are input with the electromagnetic wave of the reverse phase to excite the reverse phase.

13. A Radio Detecting and Ranging (RADAR) apparatus (6), comprising:
the patch array antenna (1A, 1B, 1C, or 1D) according to any of claims 1 to 12.
